# FASCICULE DE BREVET EUROPEEN

(11) **EP 1 132 583 B1**
(45) Date de publication et mention de la délivrance du brevet: **10.09.2003**
(21) Numéro de dépôt: 01400526.8
(22) Date de dépôt: 28.02.2001
(51) Int. Cl.: F01N 3/023, F01N 3/035, F02D 41/40, F02D 35/00, F02D 41/14, F02M 25/07, F02D 21/08

(54) **Système d'aide à la régénération d'un filtre à particules intégré dans une ligne d'échappement d'un moteur Diesel de véhicule automobile**
Vorrichtung zur Regeneration einens Partikelfilters in einem Dieselmotor
System for the regeneration of a diesel engine exhaust gas particulate filter

(30) Priorité: 28.02.2000 FR 0002475
(43) Date de publication de la demande: 12.09.2001
(73) Titulaire: Peugeot Citroen Automobiles SA, 92200 Neuilly sur Seine (FR)
(72) Inventeur: Alhinc, Nathalie, 78400 Chatou (FR); Le Tallec, Patrice, 78500 Sartrouville (FR)
(74) Mandataire: Habasque, Etienne Joel Jean-François

(56) Documents cités:
- EP-A- 0 843 084
- FR-A- 2 771 449
- FR-A- 2 774 421
- US-A- 6 003 303
- LANGKABEL G I: "LA PLUS GRANDE INVENTION DEPUIS LE MOTEUR DIESEL" REVUE AUTOMOBILE,HALLWAG S.A. BERNE,CH, vol. 94, no. 19, 6 mai 1999 (1999-05-06), page 21 XP000825692 ISSN: 0035-0761

## Description

La présente invention concerne un système d'aide à la régénération d'un filtre à particules intégré dans une ligne d'échappement d'un moteur Diesel de véhicule automobile. Le document FR2774421 décrit les caractéristiques du préambule de la revendication indépendante 1.

On sait que la réduction des émissions polluantes liées au fonctionnement des moteurs des véhicules automobiles et en particulier des moteurs Diesel est un souci permanent des constructeurs.

Différents systèmes ont déjà été développés dans l'état de la technique pour réduire le niveau de ces émissions polluantes en particulier en utilisant un filtre à particules intégré dans la ligne d'échappement.

Cependant, la gestion du fonctionnement de celui-ci et en particulier la gestion de sa régénération génère encore des difficultés.

Le but de l'invention est donc de les résoudre.

A cet effet, l'invention a pour objet un système d'aide à la régénération d'un filtre à particules intégré dans une ligne d'échappement d'un moteur Diesel de véhicule automobile, caractérisé en ce que le moteur est associé à différents organes, parmi lesquels :
- des moyens d'admission d'air dans le moteur,
- des moyens de recyclage de gaz d'échappement du moteur en entrée de celui-ci,
- un turbocompresseur,
- un catalyseur d'oxydation disposé en amont du filtre à particules dans la ligne d'échappement ;
- un système d'alimentation commune en carburant des cylindres du moteur, comportant des injecteurs à commande électrique, associés à ces cylindres,
- des moyens d'ajout au carburant d'un additif destiné à se déposer sur le filtre à particules pour abaisser la température de combustion des particules piégées dans celui-ci,
- des moyens d'acquisition d'informations relatives à différents paramètres de fonctionnement du moteur et des organes associés à celui-ci, et
- des moyens de contrôle du fonctionnement des moyens d'admission, des moyens de recyclage, du turbocompresseur et/ou du système d'alimentation pour piloter le fonctionnement du moteur, ces moyens étant en outre adaptés pour déclencher une phase de régénération du filtre à particules par combustion des particules piégées dans celui-ci en enclenchant une phase d'injections multiples de carburant dans les cylindres du moteur pendant leur phase de détente, et en ce que les moyens de recyclage des gaz d'échappement comprennent une électrovanne proportionnelle dont le fonctionnement est piloté par les moyens de contrôle en fonction d'informations délivrées par une sonde Lambda λ proportionnelle disposée en entrée du moteur, pour réguler le recyclage des gaz d'échappement en fonction de la teneur en oxygène des gaz en entrée du moteur, lors de la phase de régénération du filtre.

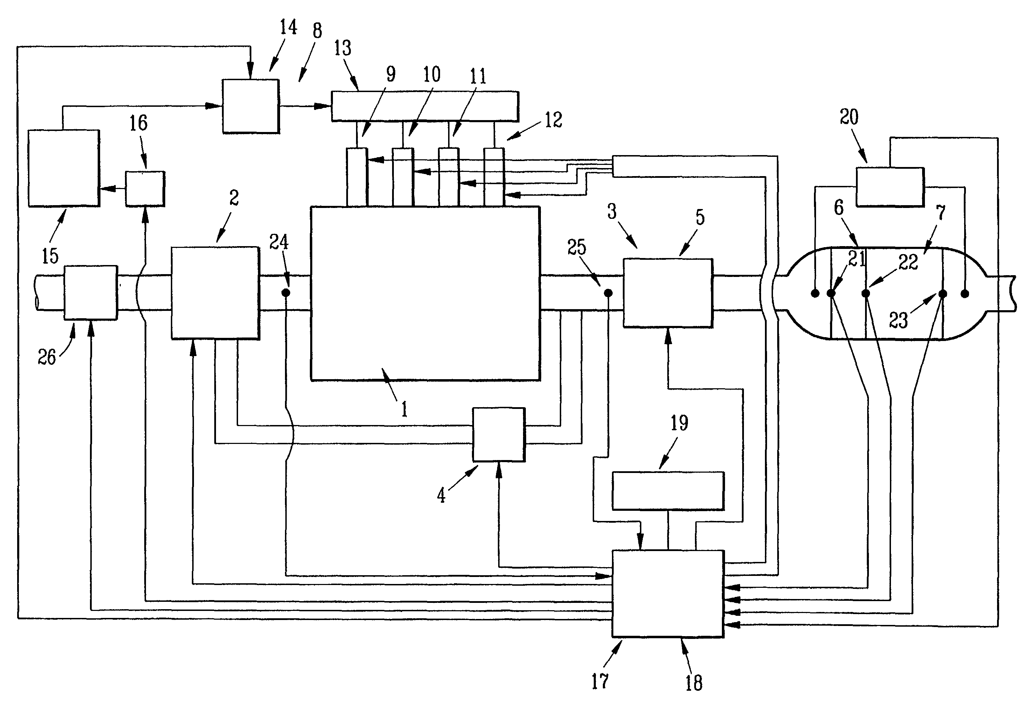

L'invention sera mieux comprise à la lecture de la description qui va suivre, donnée uniquement à titre d'exemple et faite en se référant au dessin annexé qui représente un schéma synoptique illustrant un moteur Diesel de véhicule automobile, et les différents organes associés à celui-ci.

On a en effet représenté sur cette figure, un moteur Diesel de véhicule automobile qui est désigné par la référence générale 1.

Ce moteur Diesel est associé à des moyens d'admission d'air en entrée de celui-ci, qui sont désignés par la référence générale 2.

En sortie, ce moteur est associé à une ligne d'échappement qui est désignée par la référence générale 3.

Des moyens de recyclage de gaz d'échappement du moteur en entrée de celui-ci sont également prévus et sont désignés par la référence générale 4.

Ces moyens sont alors interposés par exemple entre la sortie du moteur et les moyens 2 d'admission d'air dans celui-ci.

La ligne d'échappement peut également être associée à un turbocompresseur désigné par la référence générale 5 et plus particulièrement à la portion de turbine de celui-ci, de façon classique.

Enfin, la ligne d'échappement comporte un catalyseur d'oxydation désigné par la référence générale 6, disposé en amont d'un filtre à particules désigné par la référence générale 7, dans la ligne d 'échappement.

Le moteur est également associé à un système d'alimentation commune en carburant des cylindres de celui-ci. Ce système est désigné par la référence générale 8 sur cette figure et comporte par exemple des injecteurs à commande électrique associés à ces cylindres.

Dans l'exemple de réalisation représenté, le moteur est un moteur à quatre cylindres et comporte donc quatre injecteurs à commande électrique, respectivement 9,10,11 et 12.

Ces différents injecteurs sont associés à une rampe d'alimentation commune en carburant désignée par la référence générale 13 et reliée à des moyens d'alimentation en carburant désignés par la référence générale 14, comprenant par exemple une pompe à haute pression.

Ces moyens d'alimentation sont reliés à un réservoir de carburant désigné par la référence générale 15 et à des moyens d'ajout à ce carburant d'un additif destiné à se déposer sur le filtre à particules pour abaisser la température de combustion des particules piégées dans celui-ci.

En fait, cet additif peut par exemple être contenu dans un réservoir auxiliaire désigné par la référence générale 16 associé au réservoir de carburant 15, pour permettre l'injection d'une certaine quantité de cet additif dans le carburant.

Enfin, ce moteur et les différents organes qui viennent d'être décrits sont également associés à des moyens de contrôle de leur fonctionnement désignés par la référence générale 17 sur cette figure, comprenant par exemple tout calculateur approprié 18 associé à des moyens de stockage d'informations 19, et raccordé en entrée à différents moyens d'acquisition d'informations relatives à différents paramètres de fonctionnement de ce moteur et de ces organes, ce calculateur étant alors adapté pour contrôler le fonctionnement des moyens d'admission, des moyens de recyclage, du turbocompresseur et/ou du système d'alimentation pour piloter le fonctionnement du moteur et notamment le couple engendré par celui-ci en fonction des conditions de roulage du véhicule, de façon classique.

C'est ainsi par exemple que ce calculateur est relié à un capteur de pression différentielle 20 aux bornes du catalyseur et du filtre à particules, respectivement 6 et 7, et à des capteurs de température 21,22 et 23, respectivement en amont du catalyseur, entre ce catalyseur et le filtre à particules et en aval de ce filtre à particules dans la ligne d'échappement.

Le calculateur reçoit également une information de teneur en oxygène des gaz en entrée du moteur à partir d'une sonde Lambda proportionnelle désignée par la référence générale 24 sur cette figure, disposée en entrée du moteur.

Le calculateur peut également recevoir une information de teneur en oxygène des gaz d'échappement du moteur à partir d'une autre sonde Lambda λ proportionnelle 25 intégrée dans la ligne d'échappement de celui-ci.

En sortie, ce calculateur est adapté pour piloter les moyens d'admission d'air, les moyens de recyclage de gaz d'échappement, le turbocompresseur, les moyens d'ajout au carburant de l'additif, les moyens d'alimentation en carburant de la rampe commune et les différents injecteurs associés aux cylindres du moteur.

En particulier, ce calculateur est adapté pour déclencher une phase de régénération du filtre à particules par combustion des particules piégées dans celui-ci en enclenchant une phase d'injections multiples de carburant dans les cylindres du moteur pendant leur phase de détente.

Les particules émises par le moteur au cours de son fonctionnement sont en effet piégées dans le filtre à particules. Il convient alors de régénérer celui-ci régulièrement par combustion de ces particules.

Avantageusement, les moyens 4 de recyclage des gaz d'échappement du moteur en entrée de celui-ci comprennent une électrovanne proportionnelle qui est pilotée par les moyens de contrôle 17 en fonction des informations délivrées par la sonde Lambda λ proportionnelle 24, et éventuellement celles délivrées par la sonde Lambda 25, pour réguler le recyclage des gaz d'échappement en entrée du moteur en fonction de la teneur en oxygène des gaz en entrée du moteur, lors de la phase de régénération du filtre à particules.

Ceci permet alors notamment de mieux contrôler le déroulement de la régénération du filtre par combustion des particules.

Le calculateur 18 peut également être adapté pour piloter le fonctionnement du turbocompresseur 5 et plus particulièrement sa pression de consigne de suralimentation afin de réguler la teneur en oxygène des gaz en entrée du moteur et/ou le fonctionnement de moyens de contrôle 26 de la température des gaz en entrée du moteur comprenant par exemple tout échangeur approprié de façon classique, disposé en entrée du moteur.

## Revendications

1. Système d'aide à la régénération d'un filtre à particules intégré dans une ligne d'échappement d'un moteur Diesel de véhicule automobile, comprenant :
- des moyens (2) d'admission d'air dans le moteur,
- des moyens (4) de recyclage de gaz d'échappement du moteur en entrée de celui-ci,
- un turbocompresseur (5),
- un système (8) d'alimentation commune en carburant des cylindres du moteur, comportant des injecteurs à commande électrique (9,10,11,12), associés à ces cylindres,
- des moyens (20,21,22,23,24) d'acquisition d'informations relatives à différents paramètres de fonctionnement du moteur et des organes associés à celui-ci,
**caractérisé en ce qu'**il comporte en outre :
- un catalyseur d'oxydation (6) disposé en amont du filtre à particules (7) dans la ligne d'échappement ;
- des moyens (16) d'ajout au carburant d'un additif destiné à se déposer sur le filtre à particules (7) pour abaisser la température de combustion des particules piégées dans celui-ci, et
- des moyens (17) de contrôle du fonctionnement des moyens d'admission, des moyens de recyclage, du turbocompresseur et/ou du système d'alimentation pour piloter le fonctionnement du moteur, ces moyens étant en outre adaptés pour déclencher une phase de régénération du filtre à particules par combustion des particules piégées dans celui-ci en enclenchant une phase d'injections multiples de carburant dans les cylindres du moteur pendant leur phase de détente, et **en ce que** les moyens (4) de recyclage des gaz d'échappement comprennent une électrovanne proportionnelle dont le fonctionnement est piloté par les moyens de contrôle (17) en fonction d'informations délivrées par une sonde Lambda λ proportionnelle (24), disposée en entrée du moteur, pour réguler le recyclage des gaz d'échappement en fonction de la teneur en oxygène des gaz en entrée du moteur, lors de la phase de régénération du filtre.

2. Système selon la revendication 1, **caractérisé en ce que** les moyens de contrôle (17) sont également adaptés pour piloter le fonctionnement de moyens (26) de contrôle de la température des gaz en entrée du moteur afin de réguler la teneur en oxygène des gaz admis dans celui-ci.

3. Système selon la revendication 1 ou 2, **caractérisé en ce que** les moyens de contrôle (17) sont également adaptés pour piloter le fonctionnement du turbocompresseur (5) afin de réguler la teneur en oxygène des gaz admis dans le moteur en pilotant la pression de consigne de suralimentation du turbocompresseur.

4. Système selon l'une quelconque des revendications précédentes, **caractérisé en ce qu'**une autre sonde Lambda λ proportionnelle (25) est associée à la ligne d'échappement (3) du moteur et raccordée aux moyens de contrôle (17) pour délivrer à ceux-ci, une information de teneur en oxygène des gaz d'échappement du moteur.

5. Système selon l'une quelconque des revendications précédentes, **caractérisé en ce que** les moyens de recyclage (4) comprennent une électrovanne proportionnelle.

## Patentansprüche

1. Hilfssystem zur Regeneration eines Partikelfilters, welcher in einer Auspufflinie eines Kraftfahrzeug-Dieselmotors integriert ist, aufweisend: Mittel (2) zum Einlassen von Luft in den Motor, Mittel (4) zum Rückführen von Abgas des Motors zu seinem Einlass, einen Turbokompressor (5), ein System (8) zur gemeinsamen Treibstoff-Versorgung der Motorzylinder, aufweisend elektrisch betriebene Einspritzdüsen (9, 10, 11, 12), welche zu den Zylindern zugehörig sind, Mittel (20, 21, 22, 23, 24) zur Erfassung von Relativ-Informationen zu unterschiedlichen Betriebsparametern des Motors und der zu ihnen zugehörigen Organe, **dadurch gekennzeichnet, dass** es unter anderem aufweist: einen Oxydationskatalysator (6), welcher vor dem Partikelfilter (7) in der Auspufflinie angeordnet ist, Treibstoffzusatzmittel (16) eines Additivs, welches bestimmt ist, sich auf dem Partikelfilter (7) abzusetzen, um die Verbrennungstemperatur der darin eingefangenen Partikel zu verringern, und Steuermittel (17) zum Betrieb der Einlassmittel, der Rückführmittel, des Turbokompressors und/oder des Versorgungssystems zum Steuern des Motorbetriebs, wobei die Mittel unter anderem angepasst sind, eine Regenerationsphase des Partikelfilters durch Verbrennung der darin eingefangenen Partikel auszulösen, indem eine Phase mehrfacher Treibstoffeinspritzungen in die Motorzylinder während ihrer Entspannungsphase begonnen wird, und dass die Mittel (4) zum Rückführen des Abgases ein Proportional-Elektroventil aufweisen, dessen Betrieb durch die Steuermittel (17) gesteuert wird, in Abhängigkeit von den Informationen, welche durch eine Proportional-Lambdasonde (24) abgegeben werden, welche im Motoreingang angeordnet ist, um die Rückführung des Abgases in Abhängigkeit vom Sauerstoffgehalt des Gases am Motoreingang während der Regenerationsphase des Filters zu regeln.

2. System nach Anspruch 1, **dadurch gekennzeichnet, dass** die Steuermittel (17) auch angepasst sind, um den Betrieb von Mitteln (26) zum Steuern der Gastemperatur am Motoreingang zu steuern, um den Sauerstoffgehalt des darin eingetretenen Gases zu regulieren.

3. System nach Anspruch 1 oder Anspruch 2, **dadurch gekennzeichnet, dass** die Steuermittel (17) auch angepasst sind, um den Betrieb des Turbokompressors (5) zu steuern, um den Sauerstoffgehalt des in den Motor eingetretenen Gases zu regulieren, indem der Einstelldruck der Aufladung des Turbokompressors gesteuert wird.

4. System nach einem der vorhergehenden Ansprüche, **dadurch gekennzeichnet, dass** eine andere Proportional-Lambdasonde (25) zugehörig ist zur Auspufflinie (3) des Motors und mit den Steuermitteln (17) verbunden ist, um an diese eine Information des Sauerstoffgehaltes des Motorabgases abzugeben.

5. System nach einem der vorhergehenden Ansprüche, **dadurch gekennzeichnet, dass** die Rückführmittel (4) ein Proportional-Elektroventil aufweisen.

## Claims

1. System to assist the regeneration of a particulate filter fitted in the exhaust of a vehicle diesel engine comprising :
- means (2) for admitting air into the engine,
- means (4) for recycling exhaust gas from the engine when the latter is started,
- a turbocharger (5),
- a common fuel feed system (8) for the engine cylinders, comprising electrically controlled injectors (9, 10, 11, 12) connected to these cylinders,
- means (20, 21, 22, 23, 24) for acquiring information relating to the different operating parameters of the engine and devices associated with the latter,
**characterised in that** it furthermore comprises :
- an oxidation catalyst (6) arranged upstream of the particulate filter (7) in the exhaust ;
- means (16) for putting an additive into the fuel intended to settle on the particulate filter (7) to lower the combustion temperature of the particles trapped in the latter, and
- means (17) for controlling the operation of the admission means, the recycling means, the turbocharger and/or the feed system to control the operation of the engine, these means also being adapted to initiate a phase to regenerate the particulate filter by burning off the particles trapped in the latter by initiating a phase of multiple fuel injections into the engine cylinders during their inactive phase,
and **in that** the means (4) for recycling the exhaust gases comprise a proportional control valve which is operated by the control means (17) according to the information delivered by a proportional Lambda probe λ (24) disposed at the engine intake, to regulate the recycling of the exhaust gases according to the level of oxygen in the gases at the engine intake, during the regeneration phase of the filter.

2. System according to claim 1, **characterised in that** the control means (17) are also adapted to control the operation of the means (26) that control the temperature of the gases at the engine intake so as to regulate the level of oxygen in the gases admitted into the latter.

3. System according to claim 1 or 2, **characterised in that** the control means (17) are also adapted to control the operation of the turbocharger (5) so as to regulate the level of oxygen in the gases admitted into the engine by controlling the instructed turbocharge pressure of the turbocharger.

4. System according to any of the preceding claims, **characterised in that** another proportional Lambda probe λ (25) is associated with the exhaust (3) of the engine and is connected to the control means (17) to relay information concerning the level of oxygen in the exhaust gases of the engine.

5. System according to any of the preceding claims, **characterised in that** the recycling means (4) comprise a proportional control valve.
